(19) Europäisches Patentamt / European Patent Office / Office européen des brevets

(11) **EP 4 715 658 A1**

(12) **EUROPEAN PATENT APPLICATION**

(43) Date of publication:
**25.03.2026 Bulletin 2026/13**

(21) Application number: **25202671.1**

(22) Date of filing: **17.09.2025**

(51) International Patent Classification (IPC):
**G06F 30/20** (2020.01)   **E04B 1/99** (2006.01)
**B26D 5/00** (2006.01)   **B26F 1/38** (2006.01)
**E04B 1/82** (2006.01)   **E04B 1/84** (2006.01)
**G06F 119/10** (2020.01)

(52) Cooperative Patent Classification (CPC):
**G06F 30/20; E04B 1/86; E04B 1/99;** B26D 5/00;
B26F 1/3813; E04B 2001/8245; E04B 2001/8495;
G06F 2119/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.09.2024 US 202463696216 P**

(71) Applicant: **Armstrong World Industries, Inc.
Lancaster, PA 17604-3001 (US)**

(72) Inventor: **KRAGNESS, Eric D.
Sinking Spring, PA (US)**

(74) Representative: **Studio Torta S.p.A.
Via Viotti, 9
10121 Torino (IT)**

(54) **METHOD FOR MANUFACTURING ACOUSTIC PANELS**

(57)   A method for determining a perforation matrix includes selecting a trial value for a number of matrix increments across a length and a width of a first major surface of a substrate, selecting a trial value for a number of rows and columns in the matrix, calculating a row spacing value and a column spacing value, comparing the calculated row spacing and column spacing to the target row spacing value and the target column spacing value in the matrix to determine if the values are within a predetermined tolerance of the target row spacing value and target column spacing value, if the values are not within the predetermined tolerance of the target spacing values, repeating, and, upon calculating values within the predetermined tolerance, selecting the lower of the row spacing value and the column spacing value as the final matrix spacing value of the perforation matrix.

FIG. 1

**EP 4 715 658 A1**

**Description**

**TECHNICAL FIELD**

The present disclosure relates to a method for manufacturing acoustic panels and, more specifically, to a method for determining a perforation matrix for acoustic panels, such as wood panels.

**BACKGROUND**

Acoustic panels are designed to balance interests including acoustics, aesthetics, material costs, structural integrity, environmental impact, and other material properties. One method for manufacturing acoustic panels includes perforating a substrate to increase airflow and acoustic properties. Current methods for perforating substrates include either manually perforating with a roller or press or using an automated process for perforating with a pre-programmed machine. Drawbacks to present methods include inability to customize perforation matrices based upon the size of the substrate and materials used to form the substrate. Further, present methods are not optimized for perforating wood substrates, which may be difficult to perforate due to material properties.

Accordingly, those skilled in the art continue research and development in the field of manufacturing acoustic panels.

**SUMMARY**

The present invention is directed to methods for manufacturing an acoustic panel and methods for determining a perforation matrix.

In one example, a method for determining a perforation matrix includes a) selecting a trial value for a number of matrix increments across a length of a first major surface of a substrate; b) selecting a trial value for a number of matrix increments across a width of the first major surface of the substrate; c) selecting a trial value for a number of rows in the perforation matrix; d) selecting a trial value for a number of columns in the perforation matrix; e) calculating a row spacing value and a column spacing value; f) comparing the row spacing value and column spacing value to the target row spacing value and the target column spacing value in the perforation matrix to determine if the values are within a predetermined tolerance of a target spacing value.; g) if the values are greater than the predetermined tolerance of the target spacing value, repeating steps a) through f); and h) upon achieving values within the predetermined tolerance of the target spacing value, selecting the lower of the calculated row spacing value and the calculated column spacing value as the final matrix spacing value.

In one example, each row of the matrix includes a plurality of perforations. In one example, each column of the matrix includes a plurality of perforations. In one example, each perforation of the plurality of perforations has an average diameter ranging from about 0.1mm to about 1mm. In one example, the perforation matrix includes a plurality of perforations that are present in a perforation density ranging from about 10 perforation/in$^2$ to about 600 perforation/in$^2$.

In one example, calculating a row spacing value includes measuring the length of the first major surface of the substrate; dividing the length by a product of the trial value for the number of matrix increments across the length of the first major surface of the substrate and the trial value for the number of rows in the perforation matrix.

In one example, calculating the column spacing value includes measuring the width of the first major surface of the substrate; dividing the width by a product of the trial value for the number of matrix increments across the width of the first major surface of the substrate and the trial value for the number of columns in the perforation matrix.

In one example, the method includes selecting a predetermined tolerance of the target spacing. In one example, the predetermined tolerance of the target spacing is no more than 2%, no more than 1.5%, no more than 1 %, no more than 0.5%, or no more than 0.25 % of the target spacing. In one example, steps a) though f) are repeated more than once. In one example, the substrate is comprised of a cellulosic material, such as wood.

Also disclosed is a method for manufacturing an acoustic panel including providing a substrate having a first major surface opposite a second major surface and a side surface extending between the first major surface and the second major surface; measuring the substrate to determine a width, a length, and a thickness of the substrate; determining a perforation matrix based upon the measured width, length, and thickness of the substrate and a predetermined target perforation spacing; and perforating the substrate with the perforation matrix; wherein the determining includes calculating a quantity of rows and a quantity of columns.

In one example, each perforation of the plurality of perforations is evenly spaced from adjacent perforations. In one example, the perforating is performed such that none of the perforations and no matrix increments overlap. In one example, the determining includes calculating a diameter for each perforation of the plurality of perforations.

In one example, the calculating includes a) selecting a trial value for a number of matrix increments across a length of the first major surface of the substrate; b) selecting a trial value for a number of matrix increments across a width of the first major surface of the substrate; c) selecting a trial value for a number of rows in the perforation matrix; d) selecting a trial value for a number of columns in the perforation matrix; e) calculating a row spacing value and a column spacing value; and f) comparing the row spacing value and column spacing value to the target row spacing value and the target column spacing value in the perforation matrix to determine if the values are within a predetermined tolerance of a target spacing value.

In one example, if the values are greater than the predetermined tolerance of the target spacing value, the method includes g) repeating steps a) through f). In one example, upon achieving values within the predetermined tolerance of the target spacing value, the method includes h) selecting the lower of the calculated row spacing value and the calculated column spacing value as the final matrix spacing value.

In one example, calculating a row spacing value includes dividing the length of the first major surface of the substrate by a product of the trial value for the number of matrix increments across the length of the first major surface of the substrate and the trial value for the number of rows in the perforation matrix.

In one example, calculating the column spacing value includes dividing the width of the first major surface of the substrate by a product of the trial value for the number of matrix increments across the width of the first major surface of the substrate and the trial value for the number of columns in the perforation matrix.

In one example, the method includes applying a coating to at least one of the first major surface and the second major surface. In one example, the coating is applied prior to perforating the substrate. In one example, the coating is applied after perforating the substrate.

In one example, the method includes coupling a scrim to at least one of the first major surface and the second major surface. In one example, the scrim is coupled to at least one of the first major surface and the second major surface prior to perforating the substrate. In one example, the scrim is coupled to at least one of the first major surface and the second major surface after perforating the substrate. In one example, the acoustic panel exhibits an NRC of at least 0.7.

Also disclosed is a method for forming a surface covering system including providing a first substrate and a second substrate, each of the first and second substrate having a first major surface opposite a second major surface and a side surface extending between the first major surface and the second major surface; measuring the first and second substrates to determine a width, a length, and a thickness of each substrate; determining a perforation matrix for each substrate based upon the measured width, length, and thickness of each substrate and a predetermined target perforation spacing for each substrate; and perforating each substrate with the perforation matrix; and positioning the first substrate adjacent the second substrate to yield the surface covering system, wherein the determining includes calculating a quantity of rows and a quantity of columns for each substrate.

In one example, the first substrate and the second substrate are perforated such that, after positioning, the perforations exhibit a uniform matrix across the first major surface of the first substrate and the second major surface of the second substrate.

In one example, the calculating includes a) selecting a trial value for a number of matrix increments across a length of the first major surface of the first substrate; b) selecting a trial value for a number of matrix increments across a width of the first major surface of the first substrate; c) selecting a trial value for a number of rows in the perforation matrix; d) selecting a trial value for a number of columns in the perforation matrix; e) calculating a row spacing value and a column spacing value; and f) comparing the row spacing value and column spacing value to the target row spacing value and the target column spacing value in the perforation matrix to determine if the values are within a predetermined tolerance of a target spacing value.

In one example, if the values are greater than the predetermined tolerance of the target spacing value, the method includes g) repeating steps a) through f). In one example, upon achieving values within the predetermined tolerance of the target spacing value, the method includes h) selecting the lower of the calculated row spacing value and the calculated column spacing value as the final matrix spacing value.

In one example, calculating a row spacing value includes dividing the length of the first major surface of the first substrate by a product of the trial value for the number of matrix increments across the length of the first major surface of the first substrate and the trial value for the number of rows in the perforation matrix.

In one example, calculating the column spacing value includes dividing the width of the first major surface of the first substrate by a product of the trial value for the number of matrix increments across the width of the first major surface of the first substrate and the trial value for the number of columns in the perforation matrix.

In one example, if the first substrate and the second substrate have the same length, width, and thickness, the method further includes perforating the second substrate with the perforation matrix for the first substrate. In one example, if the first substrate and the second substrate have different dimensions, the method includes a) selecting a trial value for a number of matrix increments across a length of the first major surface of the second substrate; b) selecting a trial value for a number of matrix increments across a width of the first major surface of the second substrate; c) selecting a trial value for a number of rows in the perforation matrix; d) selecting a trial value for a number of columns in the perforation matrix; e) calculating a row spacing value and a column spacing value; and f) comparing the row spacing value and column spacing value to the target row spacing value and the target column spacing value in the perforation matrix to determine if the values are within a predetermined tolerance of a target spacing value.

**In** one example, if the values are greater than the predetermined tolerance of the target spacing value, the method includes g) repeating steps a) through f). In one example, upon achieving values within the predetermined tolerance of the target spacing value, the method includes h) selecting a lower of the calculated row spacing value and the calculated column spacing value as a final matrix spacing.

**In** one example, calculating a row spacing value includes dividing the length of the first major surface of the first substrate by a product of the trial value for the number of matrix increments across the length of the first major surface of the first substrate and the trial value for the number of rows in the perforation matrix.

**In** one example, calculating the column spacing value includes dividing the width of the first major surface of the first substrate by a product of the trial value for the number of matrix increments across the width of the first major surface of the first substrate and the trial value for the number of columns in the perforation matrix.

## BRIEF DESCRIPTION OF THE DRAWINGS

The present invention will become more fully understood from the detailed description and the accompanying drawings, wherein:

FIG. 1 is a perspective view of an acoustic panel;
FIG. 2 is a cross-sectional view of the acoustic panel of FIG. 1;
FIG. 3 is a perspective view of an acoustic panel;
FIG. 4 is a cross-sectional view of the acoustic panel of FIG. 3;
FIG. 5 is an exploded perspective view of an acoustic panel; and

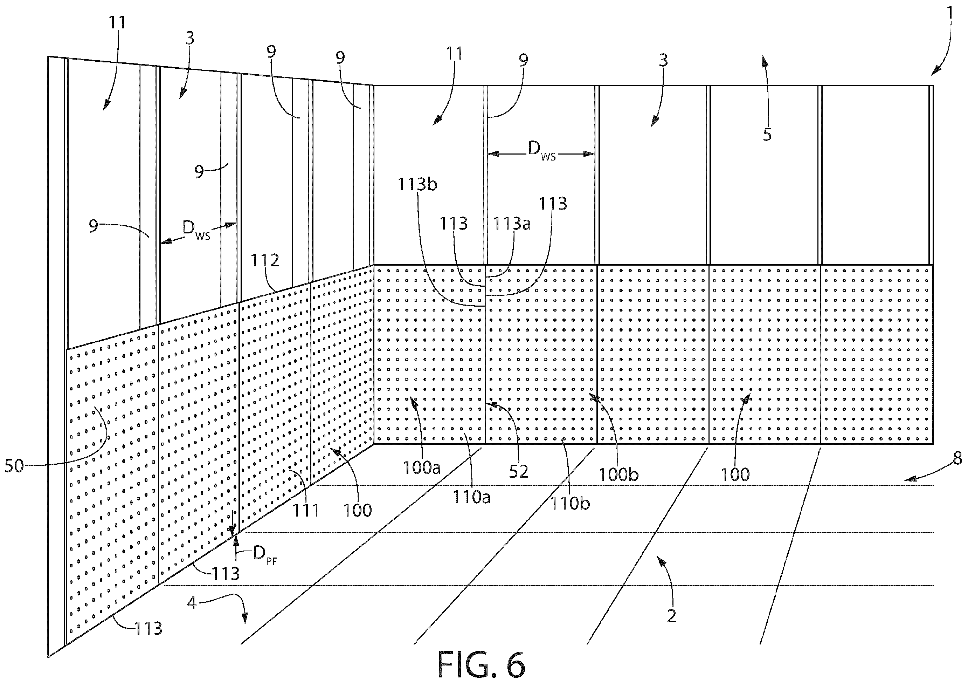

FIG. 6. is a building system comprising one or more of the acoustic panels of FIGS. 1-5.

## DETAILED DESCRIPTION

The following description of the preferred embodiment(s) is merely exemplary in nature and is in no way intended to limit the invention, its application, or uses.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top," and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such.

Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

Unless otherwise specified, all percentages and amounts expressed herein and elsewhere in the specification should be understood to refer to percentages by weight. The amounts given are based on the active weight of the material. According to the present application, the term "about" means +/- 5% of the reference value. According to the present application, the term "substantially free" less than about 0.1 wt. % based on the total of the referenced value.

The present disclosure relates to methodology for manufacturing acoustic panels having a plurality of perforations. Specifically, the present methodology is beneficial for perforating acoustic panels comprised of wood. The location of each perforation of the plurality of perforations is selected to achieve optimal acoustic properties and performance while reducing or eliminating optical defects.

Overlapping pin perforations may be problematic because it may cause visual defects to the panel. For example, overlapping may widen the dimensions of the previous perforation. Further, each time a pin is removed from the substrate, the substrate may lift around the surface area of the pin, causing the surface to fray.

Further, the number and spacing of perforations varies based upon the material of the substrate, the size of the substrate, the application of the substrate, and the desired acoustic properties for that substrate.

Accordingly, the disclosed methodology provides a solution for determining custom matrices for any size substrate panel. Disclosed is a method for determining a perforation matrix. The perforation matrix includes a plurality of perforations selectively positioned into a number of rows and a number of columns as described below. The disclosed method for determining a perforation matrix may be defined by the following relationships:

$$D_R = L/(I \times N)$$

$$D_C = W/(J \times M)$$

Wherein $D_R$ is the preliminary spacing between rows, $D_C$ is the preliminary spacing between columns, L is the substrate length, W is the substrate width, I and J are the number of matrix increments, N is the number of rows in the matrix, and M is the number of columns in the matrix.

In one or more examples, the method for determining a perforation matrix includes selecting a trial value for a number of matrix increments across the length and the width of the first major surface 111 of the substrate 110. The trial values may be determined based upon the length and width of the substrate 110 as well as the desired acoustic properties. For example, the target matrix may include a perforation matrix having row and column spacing be about 5mm to about 6mm for achieving desired acoustic properties. The target matrix is designed such that an integer multiple of each dimension, length and width, fits perfectly across the surface area of the surface to be perforated while having a small non-perforated border along the edges of the substrate 110.

In one or more examples, the method includes selecting a trial value for a number of rows and a trial value for a number of columns of perforations in the matrix. The trial values for the number of rows and the number of columns may be determined based upon the length and width of the substrate 110 as well as the desired acoustic properties.

In one or more examples, the method includes calculating a row spacing value and a column spacing value. The row spacing value and a column spacing value may be determined based upon the length and width of the substrate 110 as well as the desired acoustic properties. The row spacing value and column spacing value may each be preliminary in that they are not the final values used for the perforation matrix as further described.

In one or more examples, the method includes comparing the calculated row spacing value, $D_R$, and calculated column spacing value, $D_C$, to the target value for the row spacing and the target value for the column spacing in the matrix. The above-mentioned steps can be repeated as many times as needed, using different values for I, J, N, and M, until both $D_R$ and $D_C$ are close to the target spacing, such as within a predetermined tolerance of no more than 2%, no more than 1.5%, no more than 1%, no more than 0.5%, or no more than 0.25%, of the target spacing (5mm in the example discussed above).

Upon meeting the desired criteria of being within a predetermined tolerance of the target spacing, the method further includes selecting the lower value of the $D_R$ and the $D_C$ as the final matrix spacing value D, which applies to both the row and column spacing. The final values used for I, J, N, M, and D may be used as a preferred matrix for the acoustic panel 100.

In one example, each row of the matrix includes increments for a plurality of perforating pins that can be used to create perforations. In one example, each column of the matrix includes a plurality of perforations. In another example, each perforation of the plurality of perforations has an average diameter ranging from about 0.1mm to about 1mm. In yet another example, the perforation matrix includes a plurality of perforations that are present in a perforation density ranging from about 10 perforation/in$^2$ to about 600 perforation/in$^2$.

In one example, the pins are positioned such that each perforation of the plurality of perforations is evenly spaced from adjacent perforations. In another example, the pins are positioned such that the matrix increments do not overlap. In a further example, the determining includes calculating a diameter for each perforation of the plurality of perforations.

Each of the plurality of perforations have a diameter $D_1$. The first diameter $D_1$ of each of the plurality of perforations may range from about 0.1mm to about 1mm - including all diameters and sub-ranges there-between.

In one or more examples, the acoustic panel 100 may be approximately 97" long by 49" wide. The acoustic panel 100 may be comprised of cellulosic materials, including wood. The perforation matrix may be characterized by the following formula: # of rows x spacing between perforations x # of increments. The resulting value must be less than the size of the acoustic panel 100 (less than 97" long and less than 49" wide for the present example).

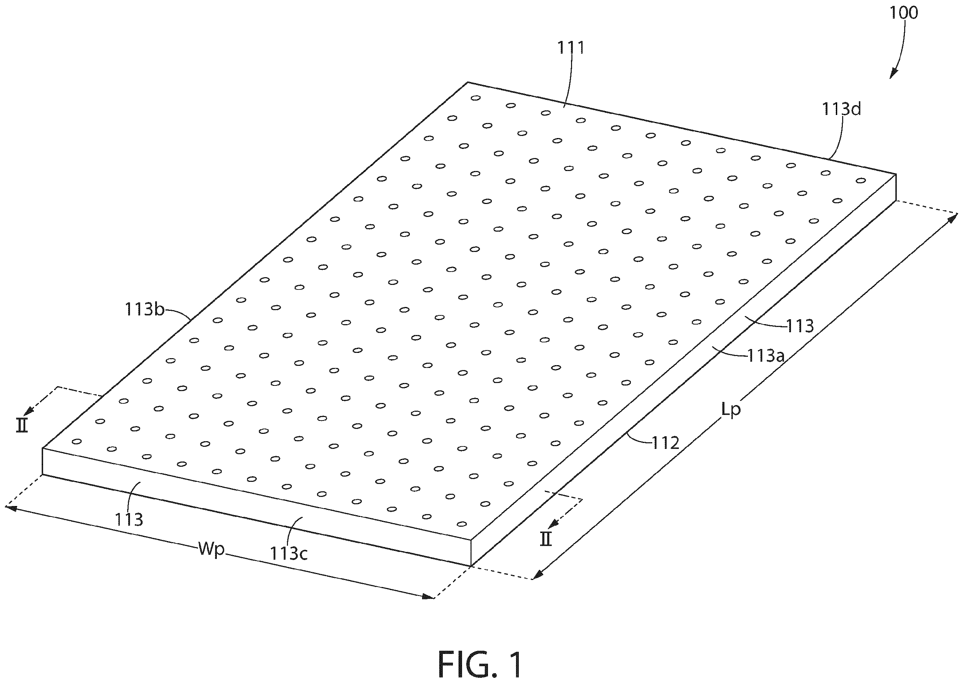

Referring to FIG. 1, the acoustic panel 100 of the present invention may comprise a substrate 110 having a first exposed major surface 111 opposite a second exposed major surface 112. The acoustic panel 100 may further comprise a side exposed surface 113 that extends between the first exposed major surface 111 and the second exposed major surface 112, thereby defining a perimeter of the ceiling panel 100.

The side exposed surface 113 may comprise a first side surface 113a opposite a second side surface 113b and a third side surface 113c opposite a fourth side surface 113d. The first and second side surfaces 113a, 113b may be substantially parallel. The third and fourth side surfaces 113c, 113d may be substantially parallel. The first and second side surfaces 113a, 113b may be substantially orthogonal to the third and fourth side surface 113c, 113d. The first side surface 113a may intersect the third side surface 113c and the fourth side surface 113d. The second side surface 113b may intersect the third side surface 113c and the fourth side surface 113d.

The acoustic panel 100 may have a panel width $W_P$ as measured by the distance between the first side surface 113a and the second side surface 113b. The panel width $W_P$ may range from about 12 inches to about 48 inches - including all widths and sub-ranges there-between. The acoustic panel 100 may have a panel length $L_P$ as measured by the distance between the third side surface 113c and the fourth side surface 113d. The panel length $L_P$ may range from about 12 inches to about 96 inches - including all widths and sub-ranges there-between.

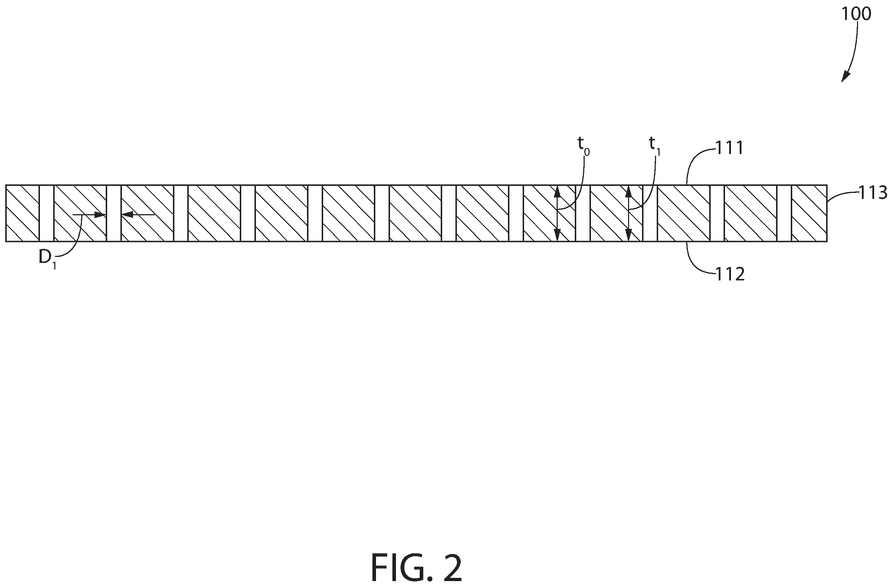

Referring now to FIGS. 1 and 2, the acoustic panel 100 of the present invention may have a panel thickness $t_0$ as measured from the first exposed major surface 111 to the second exposed major surface 112. The panel thickness $t_0$ may range from about 0.25 inch to about 1.0 inch - including all values and sub-ranges there-between.

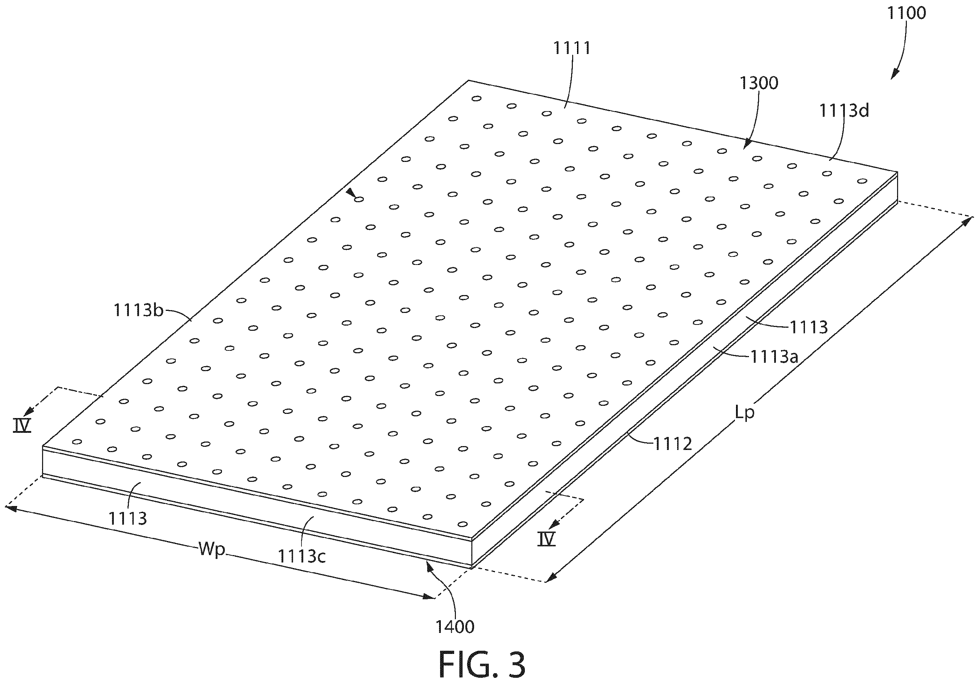

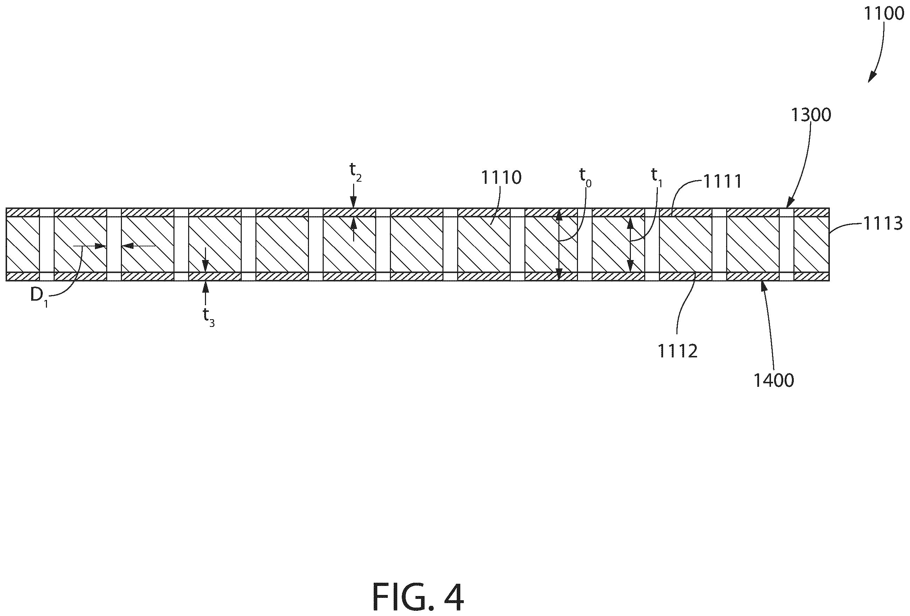

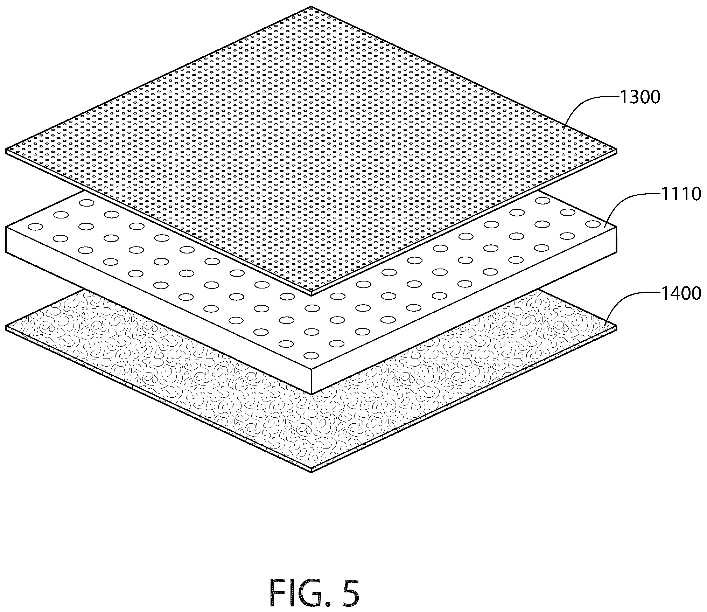

Referring to FIG. 3, FIG. 4, and FIG. 5, an acoustic panel 1100 as discussed above may comprise one or more additional layers 1300, 1400 coupled to substrate 1110 such as a scrim, a veneer, or a coating. Although not pictured, the acoustic panel 1100 may comprise one or more additional layers coupled to the side surface 1113, including 1113a, 1113b, 1113c, and 1113d of the substrate 1110 such as a scrim, a veneer, or a coating. In one example, the acoustic panel 1100 includes a veneer layer 1300, a substrate 1110, and a scrim later 1400. The veneer layer 1300 may be a cellulosic material, and may further comprise wood. The substrate 1110 may comprise a cellulosic material, and may further comprise particle board. In one example, the substrate 1110 is a particle board substrate having a plurality of openings, see FIG. 5., that have a larger diameter than the perforations of the veneer layer 1300. In one or more examples, the scrim layer 1400 may comprise fiberglass.

The substrate 1110 may have a thickness $t_1$ that extends from the first major surface 1111 to the second major surface 1112. The thickness $t_1$ may range from about 0.25 inch to about 1 inch - including all values and sub-ranges there-between. The first layer 1300 may have a thickness $t_2$ ranging from about 10 mils to about 150 mils - including all thickness and sub-ranges there-between. The second layer 1400 may have a thickness $t_3$ ranging from about 10 mils to about 150 mils - including all thickness and sub-ranges there-between.

As discussed above, the disclosure relates to a method for determining a perforation matrix, and specifically for determining a perforation matrix for perforating wood materials for acoustic panels. The disclosure further relates to a method for manufacturing an acoustic panel 100. In one example, the method includes determining a perforation matrix for application to the acoustic panel 100. The perforation matrix may collectively be a matrix of a plurality of perforations having evenly spaced perforations across an entire surface, including one or more of the first major surface 111, the second major surface 112, and the side surface 113 of the substrate 110.

In one example, the method includes measuring the length $L_P$ and width $W_P$ of the substrate 110 for calculating the surface area of the substrate 110. The measuring may be performed automatically with an optical sensor, with a measuring tool, or manually. In one example, the method further includes measuring the thickness of the substrate 110. Similarly as above, the measuring of the thickness may be performed automatically with an optical sensor, with a measuring tool, or manually.

In one or more examples, the method further includes determining a perforation matrix. The perforation matrix is calculated to achieve desired acoustic properties and visual aesthetic of the acoustic panel 100. Determining the perforation matrix includes calculating the number of rows and columns needed to achieve the desired acoustic properties and visual aesthetic. In one example, the perforation matrix includes evenly spaced perforations across the entire surface to be perforated, including one or more of the first major surface 111, second major surface 112, and side surface 113. The perforations are evenly spaced such that the substrate 110 may be rotated 90 degrees without creating a different visual impression.

In one or more examples, the determining includes calculating a location on the surface to be perforated for each row and column of perforations. The rows and columns of perforations may be positioned such that the entire surface to be perforated is evenly covered with the plurality of perforations. The rows and columns of perforations may be positioned such that none of the plurality of perforations are located against an edge of the surface to be perforated. In another example, the rows and columns of perforations may be positioned such that none of the plurality of perforations are located within 0.5" of an edge of the surface to be perforated, within 0.25" of the surface to be perforated, or within 0.125" of the surface to be perforated.

In one or more examples, the method further includes perforating the substrate with the perforation matrix. The perforation may be done such that the plurality of perforations extend from the first major surface 111 to the second major surface 112. In another example, the perforation may be performed such that the perforations only protrude partially through the thickness of the substrate.

The acoustic panel 100 manufactured by the disclosed methodology may be characterized by its acoustic properties. NRC is a measure of sound energy absorption of a material. An NRC rating of 0 is a perfect sound reflection material. An NRC rating of 1 is a perfect sound absorption material. In one example, the acoustic panel 100 exhibits an NRC value greater than 0.7. In another example, the acoustic panel 100 exhibits an NRC value greater than 0.75. In yet another example, the acoustic panel 100 exhibits an NRC value greater than 0.8, 0.85, or 0.9.

The acoustic panel 100 manufactured by the disclosed methodology may be characterized by its Fire Rating properties. In one example, the acoustic panel 100 is fire resistant such that it has a FSR rating of ASTM E84 Class B or Class A (FSI less than 25, SDI less than 450).

The acoustic panel 100 manufactured by the disclosed methodology may be further characterized by its environmental impact and sustainability. For example, the disclosed acoustic panel 100 is comprised of recyclable materials, mostly cellulosic materials, to meet sustainability standards.

Referring to FIG. 5, the acoustic panel 100 manufactured by the present methodology may further be included in a surface covering system 1 comprising one or more of the acoustic panels 100 installed in an interior space 8. FIG. 5 only shows the acoustic panel 100 installed, however, the following discussion applies to each of acoustic panels 100 and 1100.

The interior space 8 may comprise a floor surface 4 that is opposite a ceiling surface 5. The interior space 8 may further comprise a cavity space 3 and an active room environment 2. The cavity space 3 may provide a free volume for joists and/or wall stud 9 to be located within the building system 1. The active room environment 2 provides room for the building occupants during normal intended use of the building (e.g., in an office building, the active space would be occupied by offices containing computers, lamps, etc.). The floor surface 4 provides for building occupants to walk on within the room environment 2. The floor surface 4 may extend into the cavity space 3. The floor surface 4 may be formed from a building material (e.g., wood flooring, concrete flooring, metal grate, etc.).

In the installed state, the acoustic panels 100 may be supported in the interior space 8 by one or more of the wall studs 9 (for acoustic panels 100 that function as wall panels) and/or one or more of the ceiling joists (for acoustic panels 100 that function as ceiling panels - not pictured). In the installed state, the plurality of acoustic panels 100 supported by the wall studs 9 may form a wall surface 50. In the installed state, the plurality of acoustic panels 100 supported by the ceiling joists may form a ceiling surface 5.

The plurality of wall studs 9 may be arranged substantially parallel to each other. The plurality of wall studs 9 may be offset from each other by a distance $D_{WS}$ of about 16 inches - as measured on center from each adjacent wall stud 9. The distance $D_{WS}$ between wall studs 9 may provide for an open cavity volume 11. The open cavity volume 11 may be an unoccupied space within the building system 1. In other embodiments, insulation may be installed into the open cavity volume 11 - non-limiting examples of insulation include sound insulation, thermal insulation, and combinations thereto.

The wall studs 9 may be an elongated body having a substantially vertical orientation - extending in a direction that spans between the floor surface 4 and the ceiling surface 5. Depending on the room layout design, the wall studs 9 may be oriented orthogonal to the floor surface 4 - i.e., resulting in a wall surface 50 that is completely vertical (also referred to as a "vertical wall surface" 50). In other embodiments, the wall studs 9 may be oriented at an angle between about 46° to about 89° relative to the floor surface 4 - i.e., resulting in a wall surface 50 that is slanted (also referred to as a "slanted wall surface" 50).

Depending on the room layout design, the ceiling surface 5 may be substantially parallel to the floor surface 4 - i.e., resulting in a ceiling surface 5 that is completely horizontal (also referred to as a "horizontal ceiling surface" 5). In other embodiments, the ceiling surface 5 may be oriented at an angle between about 1° to about 44° relative to the floor surface 4 - i.e., resulting in a ceiling surface 5 that is slanted (also referred to as a "slanted ceiling surface" 5).

The cavity space 3 may exist behind each one of the plurality of acoustic panels 100. The active room environment 2 may exists in front of each one of the plurality of acoustic panels 100. The first exposed major surface 111 of the acoustic panel 100 may face the active room environment 2. The second exposed major surface 112 of the acoustic panel 100 may face the cavity space 3. As discussed further herein, the acoustic panels 100 of the present invention have airflow properties required for the acoustic panels 100 to functional as acoustical acoustic panels - as discussed further herein.

In a non-limiting embodiment, the acoustic panels 100 may be supported by the one or more of the wall studs 9 using a mechanical fastener (e.g., screw), adhesive, or combinations thereto. In a non-limiting embodiment, the acoustic panels 100 may be support by the one or more ceiling joists using a mechanical fastener (e.g., screw), adhesive, or combinations thereof. In another example, the acoustic panels 100 are ceiling panels hanging from a grid. In a further example, the acoustic panels 100 are wall panels positioned over drywall and attached with z bars and clips together.

The acoustic panels 100 may be positioned within building system 1 such that at least one of the side exposed surfaces 113 is located adjacent to the floor surface 4. Specifically, the first side surface 113a (or second side surface 113b) may be located adjacent to the floor surface 4 - whereby in such arrangement, the acoustic panel 100 is vertically oriented in a sideways manner (not pictured). The acoustic panel 100 vertically oriented in the sideways manner may comprise the third side surface 113c and the fourth side surface 113d being substantially parallel to the elongated body of the wall studs 9 - whereby each one of the third side surface 113c and/or fourth side surface 113d may overlap with a single wall stud 9. The acoustic panel 100 vertically oriented in the sideways manner may comprise the first side surface 113a and the second side surface 113b being substantially orthogonal to the elongated body of the wall studs 9 - whereby each one of the first side surface 113a and/or second side surface 113b may overlap with a plurality of wall studs 9.

In other embodiments, the acoustic panels 100 may be positioned within building system 1 such that at least one of the side surfaces 113 is located adjacent to the floor surface 4 such that the third side surface 113c (or fourth side surface 113d) may be located adjacent to the floor surface 4 - whereby in such arrangement, the wall panel 100 is vertically oriented in an upstanding manner. The acoustic panel 100 vertically oriented in the upstanding manner may comprise the first side surface 113a and the second side surface 113b being substantially parallel to the elongated body of the wall studs 9 - whereby each one of the first side surface 113a and/or second side surface 113b may overlap with a single wall stud 9. The acoustic panel 100 vertically oriented in the upstanding manner may comprise the third side surface 113c and the fourth side surface 113d being substantially orthogonal to the elongated body of the wall studs 9 - whereby each one of the third side surface 113c and/or fourth side surface 113d may overlap with a plurality of wall studs 9.

A plurality of acoustic panel seams 52 may exist between side surfaces 113 of two adjacent-most acoustic panels 100. In a non-limiting example, a first acoustic panel 100a and a second acoustic panel 100b may be positioned adjacent to each other, whereby a panel seam 52 is located where the first side surface 113a of the first acoustic panel 100a is located adjacent to the second side surface 113b of the second acoustic panel 100b. The acoustic panel seam 52 may substantially overlap with the wall studs 9 in a vertical direction. Although not pictured, depending on the arrangement of acoustic panels 100, the acoustic panel seam 52 may substantially overlap with the wall studs 9 in a horizontal direction.

Although not pictured, the acoustic panel seams 52 may be formed by the third side surface 113c of a first acoustic panel and the fourth side surface 113d of a second acoustic panel. Although not pictured, the acoustic panel seams 52 may be formed by the first side surface 113a (or second side surface 113b) of a first acoustic panel and the third side surface 113c (or fourth side surface 113d) of a second acoustic panel.

In the installed state, the acoustic panel 100 may be secured to one or more of the wall studs 9 such that the acoustic panel 100 is located from the floor surface 4 by a panel-floor distance $D_{PF}$. The panel-floor distance $D_{PF}$ may be determined by the vertical distance spanning between the floor surface 4 and the most-proximate point on the acoustic panel 100 from the floor surface 4. The panel-floor distance $D_{PF}$ may range from zero to about 8 feet - including all distances and sub-ranges there-between. The panel-floor distance $D_{PF}$ may range from zero to about 6 feet - including all distances and sub-ranges there-between. When the panel-floor distance $D_{PF}$ is zero, the acoustic panel 100 may be in direct contact with the floor surface 4. In some embodiments, the panel-floor distance $D_{PF}$ is less than about 6 feet.

In other embodiments, the acoustic panel 100 may also be installed such that it forms a ceiling surface (not pictured) and/or be position above the panel-floor distance $D_{PF}$.

Accordingly to yield the system shown in FIG. 5, disclosed is a method for forming a surface covering system 1 including providing a first substrate 110a and a second substrate 110b, each of the first substrate 110a and second substrate 110b having a first major surface opposite a second major surface and a side surface extending between the first major surface and the second major surface; measuring the first and second substrates to determine a width, a length, and a thickness of each substrate; determining a perforation matrix for each substrate based upon the measured width, length, and thickness of each substrate and a predetermined target perforation spacing for each substrate; and perforating each substrate with the perforation matrix; and positioning the first substrate 110a adjacent the second substrate 110b to yield the surface covering system, wherein the determining includes calculating a quantity of rows and a quantity of columns for each substrate 110a, 110b.

In one example, the first substrate and the second substrate are perforated such that, after positioning, the perforations exhibit a uniform pattern across the first major surface of the first substrate 110a and the second major surface of the second substrate 110b.

In one example, the calculating includes a) selecting a trial value for a number of matrix increments across a length of the first major surface of the first substrate 110a and b) selecting a trial value for a number of matrix increments across a width of the first major surface of the first substrate 110a.

In one or more examples, the method further includes c) selecting a trial value for a number of rows in the perforation matrix and d) selecting a trial value for a number of columns in the perforation matrix.

In one or more example, the method further includes e) calculating a row spacing value and a column spacing value and f) comparing the row spacing value and column spacing value to the target row spacing value and the target column spacing value in the perforation matrix to determine if the values are within a predetermined tolerance of a target spacing value.

In one example, calculating a row spacing value includes dividing the length of the first major surface of the first substrate 110a by a product of the trial value for the number of matrix increments across the length of the first major surface of the first substrate 110a and the trial value for the number of rows in the perforation matrix.

In one example, calculating the column spacing value includes dividing the width of the first major surface of the first substrate 110a by a product of the trial value for the number of matrix increments across the width of the first major surface of the first substrate 110a and the trial value for the number of columns in the perforation matrix.

In one example, if the values are greater than the predetermined tolerance of the target spacing value, the method includes g) repeating steps a) through f). In another example, upon achieving values within the predetermined tolerance of the target spacing value, the method includes h) selecting the lower of the calculated row spacing value and the column spacing value as the final matrix spacing value of the perforation matrix for the first substrate110a.

In one example, if the first substrate 110a and the second substrate 110b have the same length, width, and thickness, the method further includes perforating the second substrate 110b with the perforation matrix for the first substrate110a. However, if the first substrate 110a and the second substrate 110b have different dimensions, the method includes a) selecting a trial value for a number of matrix increments across a length of the first major surface of the second substrate 110b and b) selecting a trial value for a number of matrix increments across a width of the first major surface of the second substrate 110b.

The method further includes c) selecting a trial value for a number of rows in the perforation matrix and d) selecting a trial value for a number of columns in the perforation matrix. The method further includes e) calculating a row spacing value and a column spacing value and f) comparing the row spacing value and column spacing value to the target row spacing value and the target column spacing value in the perforation matrix to determine if the values are within a predetermined tolerance of a target spacing value.

In one example, if the values are greater than the predetermined tolerance of the target spacing value, the method includes g) repeating steps a) through f). In one example, upon achieving values within the predetermined tolerance of the target spacing value, the method includes h) selecting a lower of the calculated row spacing value and the calculated column spacing value as a final matrix spacing value D of the perforation matrix for the second substrate 110b. The final matrix spacing value D includes both row and column spacing.

In one example, calculating a row spacing value includes dividing the length of the first major surface of the first substrate 110a by a product of the trial value for the number of matrix increments across the length of the first major surface of the first substrate 110a and the trial value for the number of rows in the perforation matrix.

In one example, calculating the column spacing value includes dividing the width of the first major surface of the first substrate by a product of the trial value for the number of matrix increments across the width of the first major surface of the first substrate and the trial value for the number of columns in the perforation matrix.

**EXAMPLES**

The present disclosure was implemented on various acoustic panels 97" long by 49" wide. The acoustic panels were comprised of a cellulosic material having a veneer layer over a first surface of a particle board layer and a scrim layer over a second surface of the particle board layer. The matrices were determined by the method steps disclosed above. For the examples, the resulting value must be less than the size of the panels (less than 97" long and less than 49" wide for the present example).

TABLE 1

| Ex. No | Rows | Col's | Spacing (mm) | Width (mm) | Length (mm) |
|--------|------|-------|--------------|------------|-------------|
| 1 | 30 | 40 | 5.11 | 153.4 | 204.5 |
| 2 | 28 | 40 | 5.14 | 144.0 | 205.8 |
| 3 | 34 | 34 | 5.16 | 175.3 | 175.3 |
| 4 | 26 | 37 | 5.55 | 144.3 | 205.4 |
| 5 | 28 | 34 | 5.16 | 144.3 | 175.3 |

Table 1 illustrates optimal spacing values determined for various numbers of columns and rows across examples of panels 97" long by 49" wide. It was surprisingly discovered that if the perforation length is under 95.75", the resulting panel will have unperforated border, and if the perforating length is greater than 97" or 49", the pins will become damaged or break, and the panels may have damaged edges. Accordingly, it was discovered that an ideal spacing for panels of this size is between 5.07 mm and 5.13 mm for a panel having 30 rows and 40 columns (Example 1 above). Example 1 further exhibits desirable acoustic and aesthetic properties.

While the present disclosure has been described with reference to several examples, which examples have been set forth in considerable detail for the purposes of making a complete disclosure of the disclosure, such examples are merely representative and are not intended to be limiting or represent an exhaustive enumeration of all aspects of the disclosure. The scope of the disclosure is to be determined from the claims appended hereto. Further, it will be apparent to those of skill in the art that numerous changes may be made in such details without departing from the spirit and the principles of the disclosure.

**Claims**

1. A method for determining a perforation matrix comprising:

   a) selecting a trial value for a number of matrix increments across a length of a first major surface of a substrate;
   b) selecting a trial value for a number of matrix increments across a width of the first major surface of the substrate;
   c) selecting a trial value for a number of rows in the perforation matrix;
   d) selecting a trial value for a number of columns in the perforation matrix;
   e) calculating a row spacing value and a column spacing value;
   f) comparing the row spacing value and column spacing value to a target row spacing value and a target column spacing value in the perforation matrix to determine if the values are within a predetermined tolerance of the target row spacing value and the target column spacing value;
   g) if the values are greater than the predetermined tolerance of the target spacing value, repeating steps a) through f); and
   h) upon achieving values within the predetermined tolerance of the target row spacing value and the target column spacing value, selecting a lower of the calculated row spacing value and the calculated column spacing value as a final matrix spacing value of the perforation matrix.

2. The method according to claim 1, wherein each row and each column of the matrix comprises a plurality of perforations, wherein each perforation of the plurality of perforations has an average diameter ranging from about 0.1mm to about 1mm, wherein the perforation matrix comprises a plurality of perforations that are present in a perforation density ranging from about 10 perforation/in$^2$ to about 600 perforation/in$^2$.

3. The method according to claim 1 or claim 2, wherein calculating a row spacing value comprises:

   measuring the length of the first major surface of the substrate;
   dividing the length by a product of the trial value for the number of matrix increments across the length of the first major surface of the substrate and the trial value for the number of rows in the perforation matrix; and
   wherein calculating the column spacing value comprises:

   measuring the width of the first major surface of the substrate;
   dividing the width by a product of the trial value for the number of matrix increments across the width of the first major surface of the substrate and the trial value for the number of columns in the perforation matrix.

4. The method according to any one of claim 1 to claim 3, further comprising selecting a predetermined tolerance of the target spacing, wherein the predetermined tolerance of the target spacing is no more than 2%, no more than 1.5%, no more than 1%, no more than 0.5%, or no more than 0.25% of the target spacing.

5. A method for manufacturing an acoustic panel comprising:

   providing a substrate having a first major surface opposite a second major surface and a side surface extending between the first major surface and the second major surface;
   measuring the substrate to determine a width, a length, and a thickness of the substrate;
   determining a perforation matrix based upon the measured width, length, and thickness of the substrate and a predetermined target perforation spacing; and
   perforating the substrate with the perforation matrix;
   wherein the determining comprises calculating a quantity of rows and a quantity of columns.

6. The method according to claim 5, wherein the calculating comprises:

   a) selecting a trial value for a number of matrix increments across a length of the first major surface of the substrate;
   b) selecting a trial value for a number of matrix increments across a width of the first major surface of the substrate;
   c) selecting a trial value for a number of rows in the perforation matrix;
   d) selecting a trial value for a number of columns in the perforation matrix;
   e) calculating a row spacing value and a column spacing value; and
   f) comparing the row spacing value and column spacing value to a target row spacing value and a target column spacing value in the perforation matrix to determine if the values are within a predetermined tolerance of the target row spacing value and the target column spacing value.

7. The method according to claim 5 or claim 6, wherein upon achieving values within the predetermined tolerance of the target spacing value, the method comprises h) selecting a lower row of the calculated spacing value and the calculated column spacing value as a final matrix spacing value of the perforation matrix.

8. The method according to any one of claim 5 to claim 7, wherein calculating a row spacing value comprises:

dividing the length of the first major surface of the substrate by a product of the trial value for the number of matrix increments across the length of the first major surface of the substrate and the trial value for the number of rows in the perforation matrix; and
wherein calculating the column spacing value comprises:
dividing the width of the first major surface of the substrate by a product of the trial value for the number of matrix increments across the width of the first major surface of the substrate and the trial value for the number of columns in the perforation matrix.

9. A method for forming a surface covering system comprising:

providing a first substrate and a second substrate, each of the first and second substrate having a first major surface opposite a second major surface and a side surface extending between the first major surface and the second major surface;
measuring the first and second substrates to determine a width, a length, and a thickness of each substrate;
determining a perforation matrix for each substrate based upon the measured width, length, and thickness of each substrate and a predetermined target perforation spacing for each substrate;
perforating each substrate with the perforation matrix; and
positioning the first substrate adjacent the second substrate to yield the surface covering system,
wherein the determining comprises calculating a quantity of rows and a quantity of columns for each substrate.

10. The method according to claim 9, wherein the calculating comprises:

a) selecting a trial value for a number of matrix increments across a length of the first major surface of the first substrate;
b) selecting a trial value for a number of matrix increments across a width of the first major surface of the first substrate;
c) selecting a trial value for a number of rows in the perforation matrix;
d) selecting a trial value for a number of columns in the perforation matrix;
e) calculating a row spacing value and a column spacing value; and
f) comparing the row spacing value and column spacing value to a target row spacing value and a target column spacing value in the perforation matrix to determine if the values are within a predetermined tolerance of the target row spacing value and the target column spacing value.

11. The method according to claim 9 or claim 10, wherein upon achieving values within the predetermined tolerance of the target spacing value, the method comprises h) selecting a lower of the calculated row spacing value and the calculated column spacing value as a final matrix spacing value of the perforation matrix for the first substrate.

12. The method according to any one of claim 9 to claim 11, wherein calculating a row spacing value comprises:

dividing the length of the first major surface of the first substrate by a product of the trial value for the number of matrix increments across the length of the first major surface of the first substrate and the trial value for the number of rows in the perforation matrix; and
wherein calculating the column spacing value comprises:
dividing the width of the first major surface of the first substrate by a product of the trial value for the number of matrix increments across the width of the first major surface of the first substrate and the trial value for the number of columns in the perforation matrix.

13. The method according to any one of claim 9 to claim 12, wherein if the first substrate and the second substrate have different dimensions, the method comprises:

a) selecting a trial value for a number of matrix increments across a length of the first major surface of the second substrate;

b) selecting a trial value for a number of matrix increments across a width of the first major surface of the second substrate;

c) selecting a trial value for a number of rows in the perforation matrix;

d) selecting a trial value for a number of columns in the perforation matrix;

e) calculating a row spacing value and a column spacing value; and

f) comparing the row spacing value and column spacing value to a target row spacing value and a target column spacing value in the perforation matrix to determine if the values are within a predetermined tolerance of the target row spacing value and the target column spacing value.

14. The method according to claim 13, wherein upon achieving values within the predetermined tolerance of the target spacing value, the method comprises h) selecting a lower of the calculated row spacing value and the calculated column spacing value as a final matrix spacing value of the perforation matrix for the second substrate.

15. The method according to claim 13, wherein:

calculating a row spacing value comprises:
dividing the length of the first major surface of the first substrate by a product of the trial value for the number of matrix increments across the length of the first major surface of the first substrate and the trial value for the number of rows in the perforation matrix; and
calculating the column spacing value comprises:
dividing the width of the first major surface of the first substrate by a product of the trial value for the number of matrix increments across the width of the first major surface of the first substrate and the trial value for the number of columns in the perforation matrix.

100

113d

111

113b

113

113a

Lp

112

II

113c

Wp

113

II

FIG. 1

FIG. 2

EP 4 715 658 A1

FIG. 3

FIG. 4

EP 4 715 658 A1

FIG. 5

FIG. 6

EP 4 715 658 A1

Europäisches
Patentamt

European
Patent Office

Office européen
des brevets

# EUROPEAN SEARCH REPORT

**Application Number**

EP 25 20 2671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 796 576 A (CHENGDU AIRCRAFT IND GROUP CO LTD) 22 September 2023 (2023-09-22) * paragraphs [0004], [0005] * ----- | 1-4 | INV. G06F30/20 E04B1/99 |
| X | US 2023/022370 A1 (KABATSI CHRIS [US] ET AL) 26 January 2023 (2023-01-26) * paragraphs [0003], [0038], [0042] - [0047]; figures 1,3,4A * ----- | 5-15 | ADD. B26D5/00 B26F1/38 E04B1/82 E04B1/84 G06F119/10 |
| A | US 2024/141177 A1 (HUGHES JOHN E [US] ET AL) 2 May 2024 (2024-05-02) * figure 2 * ----- | 9-15 | |

**TECHNICAL FIELDS SEARCHED (IPC)**

G06F
B26F
B26D
E04B

The present search report has been drawn up for all claims

| Place of search | Date of completion of the search | Examiner |
|---|---|---|
| Munich | 28 January 2026 | Lampmann, Arne |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 2671

28-01-2026

| Patent document cited in search report | | Publication date | Patent family member(s) | | Publication date |
|---|---|---|---|---|---|
| CN 116796576 | A | 22-09-2023 | NONE | | |
| US 2023022370 | A1 | 26-01-2023 | CA | 3167865 A1 | 20-01-2023 |
| | | | US | 2023022370 A1 | 26-01-2023 |
| US 2024141177 | A1 | 02-05-2024 | CA | 3217913 A1 | 28-04-2024 |
| | | | US | 2024141177 A1 | 02-05-2024 |

EPO FORM P0459